# EUROPÄISCHE PATENTSCHRIFT

(11) **EP 0 816 645 B1**
(45) Veröffentlichungstag und Bekanntmachung des Hinweises auf die Patenterteilung: **04.10.2001**
(21) Anmeldenummer: 97110157.1
(22) Anmeldetag: 21.06.1997
(51) Int. Cl.: F01M 5/00, F01M 11/03

(54) **An ein Kurbelgehäuse eines Verbrennungsmotors anflanschbares Trägerteil für Aggregate der Schmier-Ölversorgung und -behandlung**
Mounting bracket for aggregates of oil treatment and maintenace mounted on the block of an internal combustion engine
Support de fixation pour des aggregats d'alimentation et de traitement de l'huile monté sur le carter d'un moteur à combustion interne

(30) Priorität: 04.07.1996 DE 19626867
(43) Veröffentlichungstag der Anmeldung: 07.01.1998
(73) Patentinhaber: MAHLE Filtersysteme GmbH, 70376 Stuttgart (DE); DaimlerChrysler AG, 70567 Stuttgart (DE)
(72) Erfinder: Brieden, Thomas, 71336 Waiblingen (DE); Möhle, Rolf, 74626 Bretzfeld (DE); Ruppert, Hans-Martin, 73760 Ostfildern (DE); Kronowiecki, Helmut, 73274 Notzingen (DE); Langer, Gernot, 71522 Backnang (DE); Rau, Erhard, 73235 Weilheim (DE)
(74) Vertreter: Patentanwalts-Partnerschaft Rotermund + Pfusch

(56) Entgegenhaltungen:
- DE-A- 3 803 546
- DE-U- 29 602 434
- GB-A- 2 132 693
- US-A- 3 223 197
- PATENT ABSTRACTS OF JAPAN vol. 011, no. 191 (M-600), 19.Juni 1987 & JP 62 017594 A (NIPPON DENSO CO LTD), 26.Januar 1987,

## Beschreibung

Die Erfindung betrifft ein an ein Kurbelgehäuse eines Verbrennungsmotors anflanschbares Trägerteil für Aggregate der Schmier-Ölversorgung und -behandlung nach dem Oberbegriff des Patentanspruchs 1.

Solche Trägerteile mit Aufnahmen für ein Ölfilter und einen Ölkühler sind aus DE 43 13 506 A1, DE 44 00 952 C1 und DE 42 42 997 C1 bekannt.

Hiervon ausgehend beschäftigt sich die Erfindung mit dem Problem, einen derartigen Träger mit möglichst vielen Aufnahmen für Aggregate der Schmier-Ölversorgung und -behandlung zu schaffen, der rationell herstellbar und zusammen mit den aufzunehmenden Aggregaten einfach zu montieren ist. Dabei soll der Träger an das Kurbelgehäuse in einem Zustand ansetzbar sein, in dem dieser bereits mit allen von ihm aufzunehmenden Aggregaten versehen ist.

Eine grundsätzliche Lösung dieses Problems zeigt eine Ausführung nach den kennzeichnenden Merkmalen des Patentanspruchs 1 auf.

Zweckmäßige Ausgestaltungen sind Gegenstand der Unteransprüche, worauf im Zusammenhang mit der Beschreibung eines Ausführungsbeispieles noch näher eingegangen werden wird.

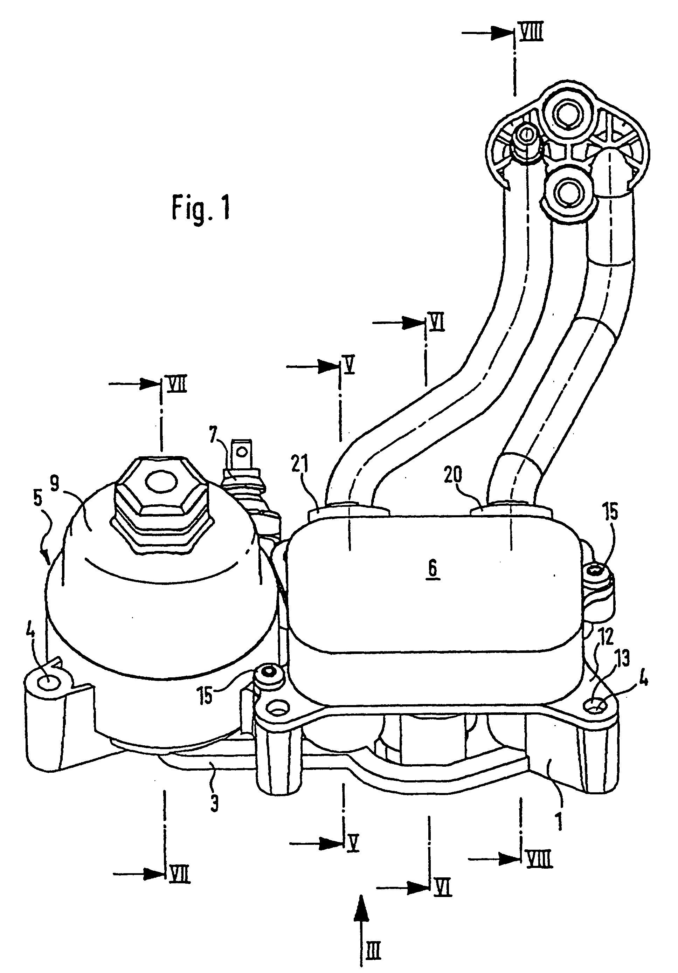

Von einem in der Zeichnung dargestellten Ausführungsbeispiel zeigen
- Fig. 1: eine perspektivische Ansicht eines mit sämtlichen einzusetzenden Aggregaten bereits komplettierten Trägers,

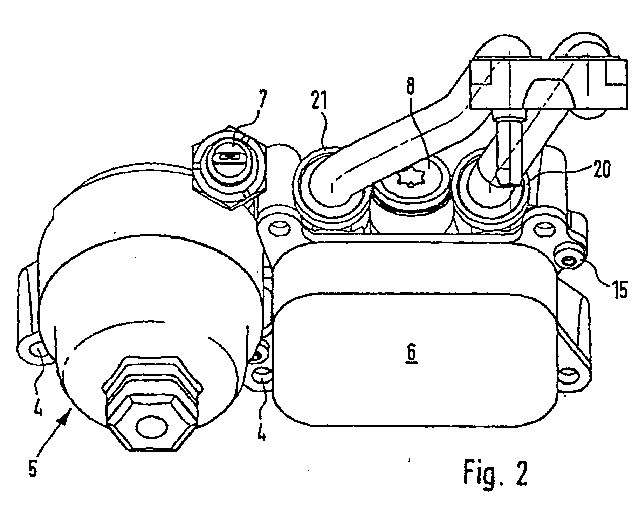

- Fig. 2: eine perspektivische Ansicht auf den Träger nach Fig. 1 unter einem anderen Blickwinkel,

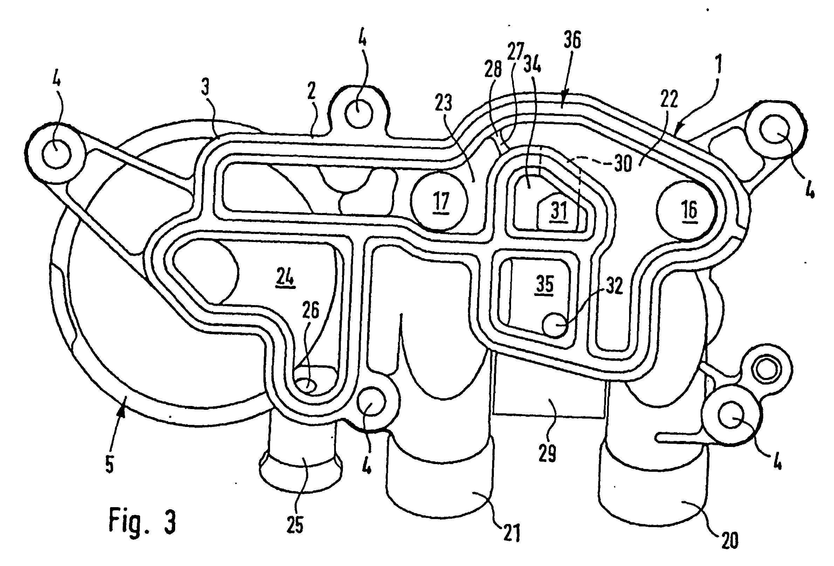

- Fig. 3: eine Ansicht auf den Verbindungsflansch des Trägers nach dem Pfeil III in Fig. 1,

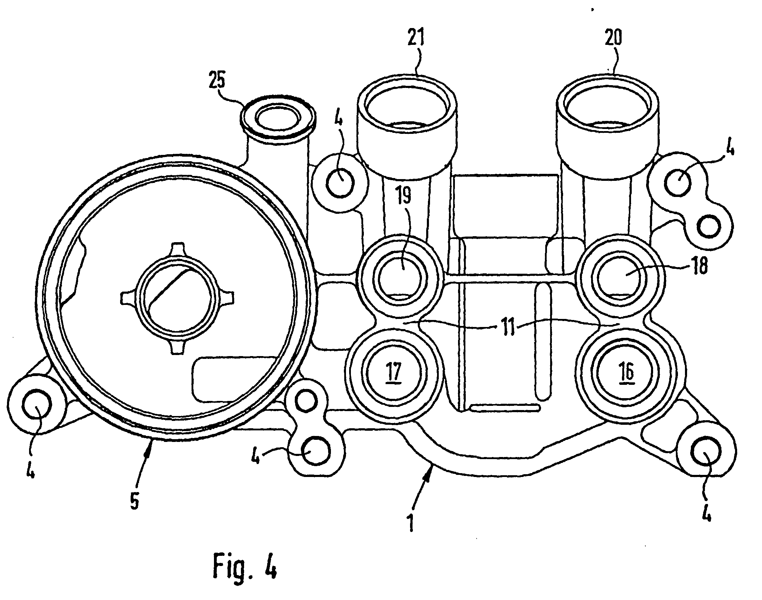

- Fig. 4: eine Ansicht auf einen Träger nach Fig. 1 ohne von diesem aufzunehmende Aggregate in einer Ansicht von oben,

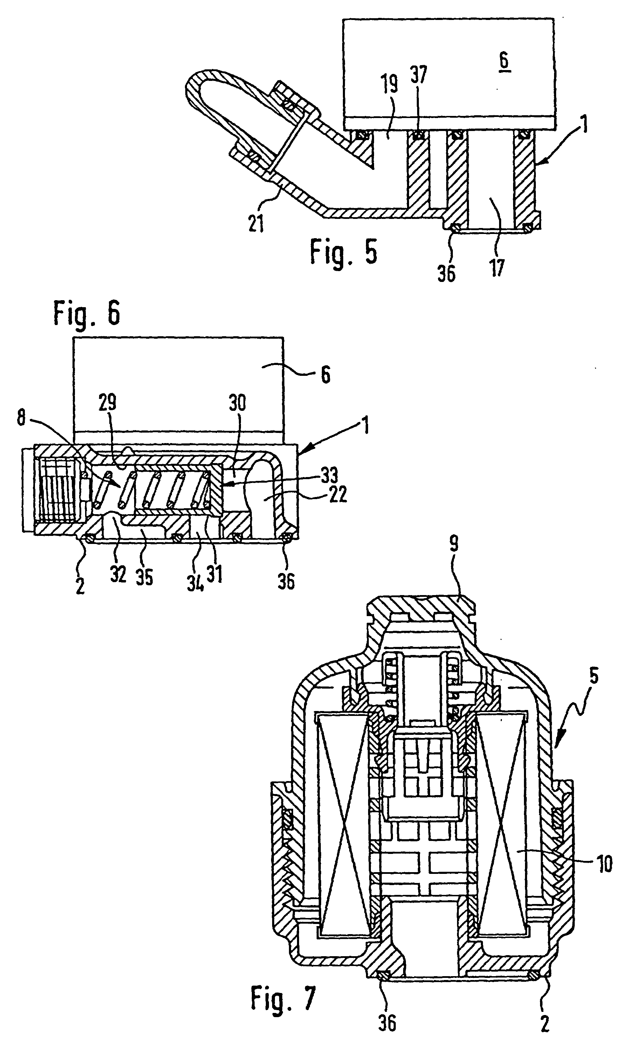

- Fig. 5: einen Schnitt durch den Träger nach Linie V-V in Fig. 1,
- Fig. 6: einen Schnitt durch den Träger nach Fig. 1 entlang der Linie VI-VI,
- Fig. 7: einen Schnitt durch den Träger nach Fig. 1 entlang der Linie VII-VII,

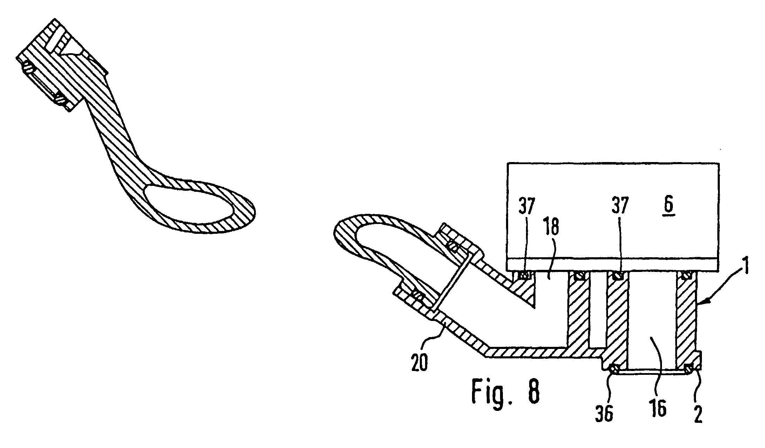

- Fig. 8: einen Schnitt durch den Träger entlang der Linie VIII-VIII in Fig. 1.

Ein Trägerteil 1 ist ein kompaktes im Guß hergestelltes Urformteil, das lediglich an Anschluß- und Aufnahmeflächenbereichen bearbeitet ist. Dieses Trägerteil 1 wird über eine Verbindungsfläche 2 eines an ihm vorgesehenen Verbindungsflansches 3 an einen Anschlußbereich eines in der Zeichnung nicht dargestellten Kurbelgehäuses dicht angesetzt. Dieses dichte Ansetzen erfolgt über in Befestigungsbohrungen 4 des Trägerteiles 1 einzusetzende nicht dargestellte Spannschrauben.

Das Trägerteil 1 besitzt Aufnahmen für ein Ölfilter 5, einen Ölkühler 6, ein Druckmeß- bzw. Warngerät 7 sowie ein Druckregelventil 8.

Die Aufnahme für das Ölfilter 5 bildet bereits einen Teil des Filtergehäuses, von dem ein Deckel 9 zum Austausch eines Filterelementes 10 abnehmbar ist.

Der Ölkühler 6 ist innerhalb eines quaderförmigen an einer Breitseite offenen Gehäuse untergebracht. Seine Funktionsteile besitzen einen an sich bekannten Aufbau, weshalb hierauf an dieser Stelle nicht weiter eingegangen werden soll. Von Bedeutung für die vorliegende Erfindung ist lediglich der Anschluß des die Funktionsteile beinhaltenden Gehäuses des Ölkühlers 6 an das Trägerteil 1.

Dieser Anschluß erfolgt lediglich in einer Ebene, indem dort Verbindungsflächen 11 des Trägerteiles 1 gegenüber entsprechenden Anschlagstellen an dem Ölkühler 6 verspannt werden. Diese Verspannung erfolgt über in die Befestigungsbohrungen 4 eingreifende Spannschrauben mit einer Gewindeverankerung in dem Kurbelgehäuse. Mit dem Verspannen des Ölkühlers 6 gegenüber dem Trägerteil 1 wird damit gleichzeitig das Trägerteil 1 fest gegenüber dem Kurbelgehäuse verspannt. An dem Gehäuse des Ölkühlers 6 sind in Flanschen 12, in denen Hauptbohrungen 13 zur Aufnahme der in die Befestigungsbohrungen 4 einzuführenden Spannschrauben vorgesehen sind, zusätzlich noch Hilfsbohrungen 13 angebracht, denen entsprechende Hilfsbohrungen 14 in dem Trägerteil 1 zugeordnet sind. In diese Hilfsbohrungen (13, 14) greift jeweils eine Hilfsschraube 15 ein. Durch zwei derartige Hilfsschrauben 15 wird der Ölkühler 6 provisorisch an dem Trägerteil 1 befestigt, um bereits vor der Montage des Trägerteils 1 an das Kurbelgehäuse eine geschlossen handhabbare Einheit aus Ölkühler 6 und Trägerteil 1 zu besitzen. Die endgültige dichte Verspannung zwischen dem Ölkühler 6 und dem Trägerteil 1 erfolgt allerdings erst bei der Montage des Trägerteiles 1 an das Kurbelgehäuse mit Hilfe in die Befestigungsbohrungen 4 eingreifender Spannschrauben. Hierdurch werden auf äußerst rationelle Weise die notwendigen Verbindungen zwischen dem Ölkühler 6 und dem Befestigungsteil 1 einerseits und dem Befestigungsteil 1 und dem Kurbelgehäuse andererseits durch ein und die gleiche Verschraubung mit denselben Spannschrauben erreicht.

In die Anlageflächen 11 des Trägerteiles 1, auf die der Ölkühler 6 aufzusetzen ist, münden Ölversorgungskanäle 16 und 17 sowie Kühlwasserkanäle 18 und 19. Bei einer dichten Anlage des Ölkühlers 6 an den Auflageflächen 11 ist damit ein kompletter Anschluß des Ölkühlers 6 an das Trägerteil 1 auf denkbar einfache Weise gegeben.

Die Kühlwasserversorgungskanäle 18 und 19 führen über Stutzen 20 und 21 nach außerhalb des Trägerteiles 1. Die frei nach außen auslaufenden Bereiche der Stutzen 20 und 21 sind als Steckmuffen zum Einstecken von Anschlußrohrleitungen ausgebildet.

Die Ölversorgungskanäle 16 und 17 führen in die Verbindungsfläche 2 des Trägerteiles 1. Dort geht der Ölversorgungskanal 16 in einen bei noch nicht montiertem Trägerteil 1 offenen Ölversorgungskanal 22 über, während der Ölversorgungskanal 17 in einen gleichartigen davon getrennten Ölversorgungskanal 23 übergeht.

Bei auf das Kurbelgehäuse montiertem Trägerteil 1 steht der Versorgungskanal 22 mit einer dort vorgesehenen Öffnung in Verbindung, durch die Schmieröl von einer beispielsweise an einer anderen Stelle angebrachten Ölpumpe angeliefert wird. Das in den Ölversorgungskanal 22 geförderte Öl gelangt durch den hiermit in Verbindung stehenden Ölversorgungskanal 16 in den Ölkühler 6, den es durch den Ölversorgungskanal 17 in den sich daran anschließenden Ölversorgungskanal 23 hinein verläßt.

Die bei noch nicht montiertem Trägerteil 1 offenen Ölversorgungskanäle 22 und 23 sind bei auf das Kurbelgehäuse aufgesetztem Trägerteil 1 verschlossene Kanäle, wobei diese Form der Kanäle durch eine dichte Anlage an der betreffenden Gegenfläche des Kurbelgehäuses erreicht wird.

Von dem Ölversorgungskanal 23 aus durchströmt das Schmieröl das Ölfilter 5, das es in einem Ölabflußkanal 24 verläßt. Dieser Ölabflußkanal 24 steht bei auf das Kurbelgehäuse montiertem Trägerteil 1 mit einer entsprechenden Öffnung in der Gehäusewand des Kurbelgehäuses in Verbindung, damit das gereinigte Schmieröl von dort zu seinen Bestimmungsstellen über geeignete Leitungskanäle geführt werden kann.

In eine Aufnahme 25 des Trägerteiles 1 ist ein Druckmeßgerät 7 für den Öldruck einsetzbar, wofür diese Aufnahme 25 über eine Bohrung 26 mit dem Ölabflußkanal 24 verbunden ist.

Zwischen den an sich getrennten Ölversorgungskanälen 22 und 23 befindet sich eine als Bypass für den durch den Ölkühler 6 geführten Schmierölstrom dienende Bypassöffnung 27. Diese wird dadurch erzeugt, daß ein Trennsteg 28 zwischen den Ölversorgungskanälen 22 und 23 geringfügig gegenüber der Verbindungsfläche 2 zurückgenommen ist. Die Bypassöffnung 27 stellt eine Drosselverbindung zwischen den beiden Ölversorgungskanälen 22 und 23 dar.

Das bereits oben erwähnte Druckregelventil 8 für die Vorgabe und Einhaltung eines bestimmten Öldruckes innerhalb beispielsweise des Ölversorgungskanales 22 ist wie folgt aufgebaut und innerhalb des Trägerteils 1 angeordnet.

Eine hohlzylindrische Aufnahme 29 mit einer zu der Verbindungsfläche 2 parallelen Achse ist in das Trägerteil 1 eingeformt. Diese Aufnahme 29 besitzt Öffnungen 30, 31 und 32, deren Bedeutung noch erläutert wird.

Die Öffnung 30 liegt an dem Ende der Aufnahme 29 und erstreckt sich in deren Achsrichtung. Diese Öffnung 30 wird von einem federbelasteten Kolben 33 verschlossen gehalten, solange der durch die Öffnung 30 auf den Kolben 33 ausgeübte Druck unterhalb des vorgebbaren Schließdruckes des Kolbens 33 liegt. Die Öffnung 30 steht mit dem Ölversorgungskanal 22 in Verbindung.

Bei einem Freigeben der Öffnung 30 durch den Kolben 33 entsteht eine Verbindung zu der Öffnung 31, die wiederum in einen Kanal 34 in der Verbindungsfläche des Trägerteiles 1 übergeht. Diesem Kanal 34 ist in der Anschlußfläche des Kurbelgehäuses eine in das Kurbelgehäuse führende Öffnung zugeordnet, so daß Schmieröl über diesen Weg in das Kurbelgehäuse als Bypassstrom zurückfließen kann.

Die in der Aufnahme 29 für das Druckregelventil 8 weiterhin noch vorhandene Öffnung 32 stellt eine Entlüftungsöffnung für das Druckregelventil 8 dar. Diese Öffnung 32 geht in einen Kanal 35 über, der ebenfalls bei montiertem Trägerteil 1 mit einer Öffnung in dem Kurbelgehäuse in Verbindung steht. Auf diesem Wege kann somit eine Entlüftung des Druckregelventiles in das Kurbelgehäuse hinein erfolgen.

Die einzelnen Kanäle 22, 23, 24, 34 und 35 innerhalb der Verbindungsfläche 2 des Trägerteiles 1 sind jeweils durch flache diese Kanäle umgreifende Dichtungen 36 gegeneinander getrennt. Die Dichtungen 36 sind bei montiertem Trägerteil 1 dicht gegenüber der betreffenden Anlagefläche des Kurbelgehäuses verspannt. Ein komplett mit sämtlichen Aggregaten versehenes Trägerteil 1 ist ein äußerst praktisch und rationell handhabbares Ölfilter-Modul mit sämtlichen Ölversorgungs- und Behandlungsaggregaten integriert in dieses Modulteil.

Der Ölkühler kann ein an sich bekannter kostengünstig herstellbarer Platten-Wärmetauscher sein.

## Patentansprüche

1. An ein Kurbelgehäuse eines Verbrennungsmotors anflanschbares Trägerteil mit Zu- und Abströmkanäle enthaltenden Aufnahmen für mindestens ein Filter (5) und einen Kühler (6) als Aggregate der Schmier-Ölversorung und -behandlung mit in die an einen Wandbereich des Kurbelgehäuses anlegbare Verbindungsfläche aus dem Inneren des Trägerteiles einmündenden Strömungskanälen, die mit Öffnungen in dem zu der Verbindungsfläche des Trägerteils zugeordneten Wandbereich des Kurbelgehäuses vorhandenen Öffnungen in Deckung bringbar sind, wobei die zur Schmierölversorgung- und Verteilung zwischen den Aggregateteilen untereinander erforderlichen Kanäle in das Trägerteil eingeformte Strömungskanäle sind,
**dadurch gekennzeichnet,**
**daß** in das Trägerteil (1) ein ausschließlich innerhalb des Trägerteiles (1) verlaufender Bypasskanal (27) für einen gedrosselten Bypass zu der Ölführung durch den Ölkühler (6) integriert ist.

2. Trägerteil nach Anspruch 1,
**dadurch gekennzeichnet,**
**daß** in diesem ein Druckregelventil (8) für den Schmierölkreislauf vorgesehen ist.

3. Trägerteil nach Anspruch 1 oder 2,
**dadurch gekennzeichnet,**
**daß** die Form und Lage der eingeformten Strömungskanäle derart ist, daß die Strömungskanäle durch von außen hinterschnittfrei eingreifende Formteile bei einer Herstellung des Trägerteils (1) durch ein Urformverfahren ausformbar sind.

4. Trägerteil nach einem der vorhergehenden Ansprüche,
**dadurch gekennzeichnet,**
**daß** das Trägerteil (1) noch zusätzlich eine Aufnahme für ein Druckmeßgerät (7) besitzt.

5. Trägerteil nach einem der vorhergehenden Ansprüche,
**dadurch gekennzeichnet,**
**daß** in der Verbindungsfläche (2) zu dem Kurbelgehäuse offene Strömungskanäle (22, 23, 24, 34, 35) eingeformt sind, die erst durch eine Anlage des Trägerteils (1) an dem Kurbelgehäuse einen geschlossenen Strömungsquerschnitt erhalten.

6. Trägerteil nach einem der vorhergehenden Ansprüche,
**dadurch gekennzeichnet,**
**daß** die Ölversorgung des Ölkühlers (6) und des Ölfilters (5) ausschließlich durch Strömungskanäle (22, 23 und 24) in der Verbindungsfläche (2) des Trägerteils (1) erfolgt.

7. Trägerteil nach einem der vorhergehenden Ansprüche,
**dadurch gekennzeichnet,**
**daß** die Versorgung des Ölkühlers (6) mit Öl und Kühlwasser über in einer gemeinsamen Ebene des Trägerteils (1) liegende Zu- und Abführöffnungen (16, 17 bzw. 18, 19) erfolgt, daß diese Ebene etwa parallel zur Verbindungsfläche (2) des Trägerteils (1) verläuft und daß die Verbindung zwischen Ölkühler (6) und Trägerteil (1) einerseits und Trägerteil (1) und Kurbelgehäuse andererseits durch - diese drei Teile gemeinsam erfassende und dicht gegeneinander verspannende - Schrauben erfolgt.

8. Trägerteil nach einem der vorhergehenden Ansprüche,
**dadurch gekennzeichnet,**
**daß** um die Strömungskanäle (22, 23, 24, 34 und 35) in der Verbindungsfläche (2) des Trägerteils (1) und um die in der Ölkühler (6)-Anschlußebene liegenden Öffnungen (16, 17, 18, 19) Dichtungen (36 bzw. 37) zur dichten Anlage zwischen den aneinanderliegenden Verbindungsflächen eingesetzt sind.

9. Trägerteil nach einem der vorhergehenden Ansprüche,
**dadurch gekennzeichnet,**
**daß** an dem Ölkühler (6) und dem Trägerteil (1) miteinander zusammenwirkende Hilfsbefestigungsmittel (14, 15) für eine provisorische Verbindung zwischen diesen beiden Teilen (1, 6) angebracht sind, daß diese Hilfsbefestigungsmittel (14, 15) unabhängig von Hauptbefestigungsmitteln (4) sind und gleichzeitig mit diesen wirksam sein können.

10. Trägerteil nach einem der vorhergehenden Ansprüche mit einem Druckregelventil,
**gekennzeichnet durch die Merkmale**
- das Druckregelventil (8) besitzt einen axial federbelasteten in einer zylindrischen Aufnahme (29) des Trägerteils (1) verschiebbaren Kolben (33),
- die Achse dieser zylindrischen Aufnahme (29) verläuft etwa parallel zur Verbindungsfläche (2) des Trägerteils (1),
- der Kolben (33) ist mit einer geschlossenen Stirnfläche an eine in Achsrichtung der Aufnahmen (29) in einen Ölversorgungskanal (22) führende Öffnung (30) dicht anpressbar,
- die Öffnung (30) steht in einem **durch** den Kolben (33) nicht verschlossenen Zustand des Trägerteils (1) mit einem in die Verbindungsfläche (2) einmündenden Kanal (34) in Verbindung,
- eine in dem Druckregelventil (6) vorgesehene Entlüftungs-Öffnung (32) steht mit einem in die Verbindungsfläche (2) des Trägerteils (1) einmündenden Kanal (35) in Verbindung,
- die Kanäle (34 und 35) des Druckregelventiles (8) können bei an das Kurbelgehäuse montiertem Trägerteil (2) mit in der Kurbelgehäusewand in das Innere des Kurbelgehäuses führenden Öffnungen in Verbindung stehen.

## Claims

1. Carrier member which can be flanged onto a crankcase of an internalcombustion engine, comprising holders containing feed and discharge ducts for at least one filter (5) and one cooler (6) as units of the lubricating oil supply and treatment system with flow ducts which open into the connecting faces, which can be attached to a wall region of the crank case, from the interior of the carrier member and can be brought into congruence with orifices provided in the wall region of the crankcase associated with the connecting face of the carrier member, wherein the ducts required for the supply and distribution of lubricating oil among the parts of the units are flow ducts moulded into the carrier member, **characterised in that** a bypass duct (27) extending exclusively inside the carrier member (1) for a throttled bypass to the oil guide means through the oil cooler (6) is integrated into the carrier member (1).

2. Carrier member according to claim 1, **characterised in that** a pressure regulating valve (8) for the lubricating oil circuit is provided therein.

3. Carrier member according to claim 1 or 2, **characterised in that** the shape and position of the moulded-in flow ducts is such that the flow ducts can be formed by a moulding process during production of the carrier member (1) by mouldings which engage without undercuts from the exterior.

4. Carrier member according to any of the preceding claims, **characterised in that** the carrier member (1) additionally has a holder for a pressure measuring device (7).

5. Carrier member according to any of the preceding claims, **characterised in that** flow ducts (22, 23, 24, 34, 35) which are open to the crankcase and obtain a closed cross-section for flow only by application of the carrier member (1) on the crankcase are shaped in the connecting face (2).

6. Carrier member according to any of the preceding claims, **characterised in that** oil is supplied to the oil cooler (6) and oil filter (5) exclusively through flow ducts (22, 23 and 24) in the connecting face (2) of the carrier member (1).

7. Carrier member according to any of the preceding claims, **characterised in that** the oil cooler (6) is supplied with oil and cooling water via feed and discharge orifices (16, 17 or 18, 19) located in a common plane of the carrier member (1), **in that** this plane extends substantially parallel to the connecting face (2) of the carrier member (1) and **in that** the connection between oil cooler (6) and carrier member (1) on the one hand and carrier member (1) and crankcase on the other hand is produced by screws which grasp these three parts together and fasten them tightly against one another.

8. Carrier member according to any of the preceding claims, **characterised in that** seals (36 and 37) for tight contact between the connecting faces resting against one another are used round the flow ducts (22, 23, 24, 34 and 35) in the connecting face (2) of the carrier member (1) and round the orifices (16, 17, 18, 19) located in the oil cooler (6) attachment plane.

9. Carrier member according to any of the preceding claims, **characterised in that** mutually cooperating auxiliary fixing means (14, 15) for a temporary connection between these two parts (1, 6) are arranged on the oil cooler (6) and the carrier member (1), **in that** these auxiliary fixing means (14, 15) are independent of main fixing means (4) and can act simultaneously therewith.

10. Carrier member according to any of the preceding claims with a pressure regulating valve, **characterised by** the features
the pressure regulating valve (8) has an axially spring-loaded piston (33) displaceable in a cylindrical holder (29) of the carrier member (1),
the axis of this cylindrical holder (29) extends substantially parallel to the connecting face (2) of the carrier member (1),
the piston (33) can be pressed tightly with a closed end face onto an orifice (30) leading into an oil supply duct (22) in the axial direction of the holders (29),
the orifice (30) communicates with a duct (34) opening into the connecting face (2), when the carrier member (1) is not closed by the piston (33),
a vent (32) provided in the pressure regulating valve (6) communicates with a duct (35) opening into the connecting face (2) of the carrier member (1),
the ducts (34 and 35) of the pressure regulating valve (8) can communicate with orifices leading into the interior of the crankcase in the crankcase wall when the carrier member (2) is mounted on the crankcase.

## Revendications

1. Support de fixation monté sur le carter d'un moteur à combustion interne avec des logements comportant des conduits d'alimentation et d'évacuation pour au moins un filtre (5) et un refroidisseur (6) comme agrégats d'alimentation et de traitement de l'huile lubrifiante, avec des conduits d'écoulement débouchant de l'intérieur du support de fixation dans la surface d'assemblage, qui peut être placée sur une zone de paroi du carter, conduits qui peuvent être amenés en recouvrement avec des ouvertures présentes dans la zone de paroi du carter, associée à la surface d'assemblage du support de fixation, les conduits mutuellement requis entre les parties d'agrégats pour l'alimentation et la distribution d'huile lubrifiante étant des conduits d'écoulement conformés dans le support de fixation, **caractérisé en ce qu'**un conduit de bipasse (27), s'étendant exclusivement à l'intérieur du support de fixation (1), est intégré au support de fixation (1) pour un bipasse étranglé du passage d'huile au travers du refroidisseur d'huile (6).

2. Support de fixation suivant la revendication 1, **caractérisé en ce qu'**une soupape de régulation de pression (8) est prévue dans ce support pour le circuit d'huile lubrifiante.

3. Support de fixation suivant l'une des revendications 1 et 2, **caractérisé en ce que** la forme et la position des conduits d'écoulement conformés sont telles que les conduits d'écoulement peuvent être mis en forme par des pièces usinées s'engageant de l'extérieur sans contre-dépouille lors d'une fabrication du support de fixation (1) par un procédé de formage primaire.

4. Support de fixation suivant l'une des revendications précédentes, **caractérisé en ce que** le support de fixation (1) présente en supplément un logement pour un manomètre (7).

5. Support de fixation suivant l'une des revendications précédentes, **caractérisé en ce que** des conduits d'écoulement (22, 23, 24, 34, 35), ouverts vers le carter, sont conformés dans la surface d'assemblage (2), ces conduits n'obtenant une section transversale d'écoulement fermée que par un appui du support de fixation (1) sur le carter.

6. Support de fixation suivant l'une des revendications précédentes, **caractérisé en ce que** l'alimentation en huile du refroidisseur d'huile (6) et du filtre à huile (5) est exclusivement assurée par des conduits d'écoulement (22, 23 et 24) dans la surface d'assemblage (2) du support de fixation (1).

7. Support de fixation suivant l'une des revendications précédentes, **caractérisé en ce que** l'alimentation du refroidisseur d'huile (6) en huile et en eau de refroidissement est assurée par l'intermédiaire d'ouvertures d'alimentation et d'évacuation (16, 17 et/ou 18, 19), situées dans un plan commun du support de fixation (1), **en ce que** ce plan s'étend à peu près parallèlement à la surface d'assemblage (2) du support de fixation (1), et **en ce que** l'assemblage entre le refroidisseur d'huile (6) et le support de fixation (1), d'un côté, le support de fixation (1) et le carter, d'un autre côté, est assuré par des vis étroitement serrées les unes contre les autres et interceptant conjointement ces trois éléments.

8. Support de fixation suivant l'une des revendications précédentes, **caractérisé en ce que** des joints (36 et/ou 37) pour un contact hermétique entre les surfaces d'assemblage situées les unes contre les autres sont mis en place autour des conduits d'écoulement (22, 23, 24, 34 et 35) dans la surface d'assemblage (2) du support de fixation (1) et autour des ouvertures (16, 17, 18, 19) situées dans le plan de jonction du refroidisseur d'huile (6).

9. Support de fixation suivant l'une des revendications précédentes, **caractérisé en ce que** des moyens de fixation auxiliaires (14, 15), concourant entre eux, sont mis en place sur le refroidisseur d'huile (6) et sur le support de fixation (1) pour un assemblage provisoire entre ces deux pièces (1, 6), **en ce que** ces moyens de fixation auxiliaires (14, 15) sont indépendants de moyens de fixation principaux (4) et peuvent être simultanément actifs avec ces derniers.

10. Support de fixation suivant l'une des revendications précédentes avec une soupape de régulation de pression, **caractérisé par** les caractéristiques
- la soupape de régulation de pression (8) présente un piston (33) chargé par ressort dans le sens axial et mobile dans un logement cylindrique (29) du support de fixation (1),
- l'axe de ce logement cylindrique (29) se situe à peu près parallèlement à la surface d'assemblage (2) du support de fixation (1),
- le piston (33) peut être pressé hermétiquement par une surface frontale fermée sur une ouverture (30), menant dans le sens axial des logements (29) dans un conduit d'alimentation en huile (22),
- dans un état de non fermeture du support de fixation (1) par le piston (33), l'ouverture (30) est en liaison avec un conduit (34) débouchant dans la surface d'assemblage (2),
- une ouverture d'aération (32), prévue dans la soupape de régulation de pression (6), est en liaison avec un conduit (35) débouchant dans la surface d'assemblage (2) du support de fixation (1),
- à l'état de montage du support de fixation (1) sur le carter, les conduits (34 et 35) de la soupape de régulation de pression (8) peuvent être en liaison avec des ouvertures menant dans la paroi du carter à l'intérieur de ce dernier.
